# EUROPÄISCHE PATENTANMELDUNG

(11) **EP 3 650 973 A1**
(43) Veröffentlichungstag der Anmeldung: **13.05.2020**
(21) Anmeldenummer: 18204911.4
(22) Anmeldetag: 07.11.2018
(51) Int. Cl.: G05B 23/02, G05B 13/04, G05B 19/042, F03D 7/02

(54) **SYSTEMSTEUERUNG**

(71) Anmelder: Siemens Aktiengesellschaft, 80333 München (DE)
(72) Erfinder: Löw, Stefan, 95698 Neualbenreuth (DE); Obradovic, Dragan, 85521 Ottobrunn (DE)

(57) **Zusammenfassung**

Die Erfindung betrifft ein Verfahren zum Steuern eines Systems mit dynamischer Last, wobei das Verfahren Schritte des Bestimmens eines zeitlichen Verlaufs von Lastwerten des Systems; des Bestimmens charakteristischer Werte des Verlaufs; des Bestimmens einer Lastrepräsentation lastabhängiger Ermüdungszyklen des Systems auf der Basis der charakteristischen Werte; des Bestimmens einer Ableitung numerischer Werte der Lastrepräsentation bezüglich numerischer Werte der Last; des Bestimmens einer Schädigungsrepräsentation in Abhängigkeit von der Lastrepräsentation und der Ableitung der Lastrepräsentation basierend auf einer Schädigungsfunktion, wobei die Schädigungsrepräsentation die totale Ableitung der Schädigungsfunktion repräsentiert; und des Bereitstellens einer Ansteuerung des Systems, basierend auf einer Optimierungsfunktion, wobei die Optimierungsfunktion auf der Schädigungsrepräsentation basiert, umfasst.

## Beschreibung

Viele industrielle Systeme, etwa Windkraftanlagen, Generatoren oder Produktionsanlagen unterliegen schwankenden Belastungen, die entsprechend schwankende Ermüdungsschäden mit sich bringen können. Für eine optimierte Ansteuerung dieser Systeme ist es wünschenswert, solche Ermüdungsschäden zu berücksichtigen. Die übliche Parametrisierung der Ermüdung basiert auf Ermüdungszyklen, etwa nach dem Rainflow-Verfahren, was es schwierig macht, die Parametrisierung in eine Optimierungsfunktion einzubinden.

Es ist eine Aufgabe der vorliegenden Erfindung, eine verbesserte Ansteuerung von Systemen mit dynamischen Lasten zu ermöglichen, insbesondere hinsichtlich der verbesserten Berücksichtigung von Ermüdungsschäden. Die Erfindung löst diese Aufgabe mittels der Gegenstände der unabhängigen Ansprüche. Unteransprüche geben bevorzugte Ausführungsformen wieder.

Die Erfindung betrifft ein erstes und ein zweites Verfahren zum Steuern eines Systems mit dynamischer Last, beispielsweise die mechanische Last auf ein Windrad.

Nach einem ersten Aspekt der Erfindung umfasst das erste Verfahren Schritte des Bestimmens eines zeitlichen Verlaufs von Lastwerten des Systems; des Bestimmens charakteristischer Werte des Verlaufs; des Bestimmens einer Lastrepräsentation lastabhängiger Ermüdungszyklen des Systems auf der Basis der charakteristischen Werte; des Bestimmens einer Ableitung numerischer Werte der Lastrepräsentation bezüglich numerischer Werte der Last; des Bestimmens einer Schädigungsrepräsentation in Abhängigkeit von der Lastrepräsentation und der Ableitung der Lastrepräsentation, basierend auf einer Schädigungsfunktion, wobei die Schädigungsrepräsentation die totale Ableitung der Schädigungsfunktion repräsentiert; und des Bereitstellens einer Ansteuerung des Systems, basierend auf einer Optimierungsfunktion, wobei die Optimierungsfunktion auf der Schädigungsrepräsentation basiert, umfasst. Die totale Ableitung umfasst Werte über die gesamte betrachtete Zeitspanne des Verlaufs.

Nach einem zweiten Aspekt der Erfindung umfasst das zweite Verfahren Schritte des (a) Festlegens des Werts eines Steuerparameters des Systems; (b) des Bestimmens eines zeitlichen Verlaufs von Lastwerten des Systems; (c) des Bestimmens charakteristischer Werte des Verlaufs; (d) des Bestimmens einer Lastrepräsentation lastabhängiger Ermüdungszyklen des Systems auf der Basis der charakteristischen Werte; (e) des Bestimmens einer Schädigungsrepräsentation in Abhängigkeit von der Lastrepräsentation basierend auf einer Schädigungsfunktion; (f) des Veränderns des Werts des Steuerparameters und wiederholen der Schritte (b) bis (e), um eine weitere Schädigungsrepräsentation zu bestimmen; sowie des Bildens einer finiten Differenz auf der Basis der Schädigungsrepräsentation und der weiteren Schädigungsrepräsentation und den zugeordneten Werten des Steuerparameters, um eine Ableitung der Schädigungsrepräsentation zu bestimmen; und des Bereitstellens einer Ansteuerung des Systems, basierend auf einer Optimierungsfunktion, wobei die Optimierungsfunktion auf der Ableitung der Schädigungsrepräsentation und einem aktuellen Wert des Steuerparameters basiert.

Erfindungsgemäß wurde erkannt, dass ein üblicher Algorithmus zur Bestimmung einer Schädigungsrepräsentation aufgrund seiner Struktur mit Schleifen und/oder Bedingungen nicht ableitbar ist. Es wird daher vorgeschlagen, den Ableitungsschritt auf numerischen Werten auszuführen. Durch die Ableitung des Ergebnisses der Lastrepräsentation bezüglich der charakteristischen Werte kann darauf verzichtet werden, eine geschlossene differenzierbare Darstellung des Algorithmus der Lastrepräsentation in die Kostenoptimierung einzubeziehen.

Das erste Verfahren verwendet exakte Ableitungen und ein automatisches Differenzieren, während das zweite Verfahren finite Differenzen mit Fehlern verwendet.

Ein charakteristischer Wert kann im Wesentlichen einem Extremwert entsprechen. Bevorzugt weicht ein charakteristischer Wert um nicht mehr als ein vorbestimmtes Maß von einem Extremwert ab. Ein Extremwert kann immer dann bestimmt werden, wenn eine Ableitung des Verlaufs der Lastwerte sein Vorzeichen wechselt. Ein Wechsel von einem positiven auf ein negatives Vorzeichen entspricht einem lokalen Maximum, ein umgekehrter einem lokalen Minimum.

Andererseits kann das erfindungsgemäße Verfahren eine bessere Berücksichtigung der Ermüdung erlauben als herkömmliche Schätzverfahren. Die Lastrepräsentation kann allgemein auf einem Zählverfahren basieren, welches Ermüdungszyklen zählt, und etwa ein Extremwertzyklusverfahren sein kann. Bei einem Zählverfahren können Zyklen gewichtet werden, etwa danach, ob sie ganze Zyklen oder Halbzyklen sind.

Es kann vorgesehen sein, dass die Lastrepräsentation auf einem Rainflow-Verfahren oder auf einem ähnlichen Verfahren basiert. Bei einem solchen Verfahren können Zyklen zwischen charakteristischen Werten, die innerhalb eines Beobachtungszeitraumes auftreten, ermittelt werden. Handelt es sich bei den charakteristischen Werten um Extremwerte, also Minima und Maxima, so kann man auch von einem Extremwertzyklusverfahren sprechen. Für die Zyklen können jeweils Paare oder Tupel, zum Beispiel Tupel, aus charakteristischen Werten der Last, gebildet werden.

In einer Ausführungsform werden die Ableitungen der Schädigungsfunktion bezüglich der Lastrepräsentation, welche auf charakteristischen Werten der Last basiert, bestimmt. In einer anderen Ausführungsform basiert die Lastrepräsentation auf allen Lastwerten.

Es können etwa in einem Beobachtungszeitraum alle Zyklen, etwa Vollzyklen und Halbzyklen, erfasst werden, die zwischen Maxima und Minima durchlaufen werden, oder nur solche, welche in einem definierten Bereich liegen und/oder einen Schwellenwert überschreiten, etwa einen Minimalabstand (Minimalamplitude)zwischen Maximum und Minimum. Ein solcher Abstand kann allgemein als Zyklusabstand oder Amplitude bezeichnet werden. Die charakteristischen Werte können allgemein lokale charakteristische Werte umfassen. Die Lastpräsentation kann basierend auf einer Systemrepräsentation bestimmt sein, etwa auf Messwerten und/der Simulation und/oder Schätzungen und/oder einer anderen Parametrisierung. Die Systemrepräsentation kann die Systemtrajektorie insbesondere bezüglich der Last über den Beobachtungszeitraum repräsentieren. Ein Beobachtungszeitraum kann allgemein ein Zeitraum sein, über welchen das System für die Lastrepräsentation beobachtet wird, etwa um typisches Verhalten der Last über die Zeit zu berücksichtigen. Eine Ansteuerung kann über die Beobachtungszeit oder einen anderen Ansteuerungszeitraum erfolgen.

Die Schädigungsrepräsentation kann Werte der Schädigungsfunktion an den charakteristischen Werten der Last repräsentieren. Somit können Werte der Schädigungsfunktion und zugehörige Ableitungen berücksichtigt werden.

Die Lastrepräsentation kann auf einen oder mehrere vergangene Zeitpunkte bezogen sein, insbesondere indem die Lastrepräsentation auf der Basis von Werten bestimmt wird, die an dem System gemessen wurden. Die Lastrepräsentation kann aber auch auf einen oder mehrere zukünftige Zeitpunkte bezogen sein. Dazu kann die Lastrepräsentation auf der Basis einer Prädiktion bestimmt werden. Zeitpunkte, auf welche die Lastrepräsentation bezogen ist, können äquidistant oder lückenhaft sein. Statt eines Zeitpunkts kann auch ein Zeitintervall verwendet werden. Verwendete Zeitpunkte / Zeitintervalle müssen nicht zusammenhängend sein.

Die Schädigungsrepräsentationen können in einer ersten Phase auf der Basis einer Vielzahl Lastrepräsentationen bestimmt werden, wobei die Ansteuerung des Systems in einer zweiten Phase auf der Basis der bestimmten Schädigungsrepräsentationen bereitgestellt wird. Eine solche Technik ist als Explizite Modellprädiktive Regelung (engl.: explicit Model Predictive Controlling, eMPC) bekannt und kann die Abwicklung aufwändiger Bestimmungen im Vorfeld ermöglichen, während am laufenden System eine rasche und einfache Bestimmung der Ansteuerung durchgeführt werden kann. Die Schädigungsrepräsentationen können beispielsweise in einer Tabelle oder als Funktion bestimmt werden. Das Bestimmen der Ansteuerung kann eine Interpolation zwischen Tabellenwerten oder eine Auswertung ("fitting") der Funktion umfassen.

In einigen Varianten kann die Schädigungsrepräsentation Ableitungen der Schädigungsfunktion an Mittelwerten der Last basierend auf der Lastrepräsentation repräsentiert. Ein Mittelwert kann ein Mittelwert des zugehörigen Zyklus sein, etwa ein Mittelwert der Last über den gesamten Zyklus, oder ein Mittelwert zwischen Maximum und Minimum des Zyklus. Es können auch Mittelwerte über mehrere Zyklen verwendet werden, etwa nach Klassen. Zyklusklassen können beispielsweise nach Maximalwert und/oder Minimalwert und/oder Zyklusabstand oder Amplitude klassifiziert sein.

Allgemein kann die Schädigungsfunktion auf einer Wöhler-Funktion basieren. Es sind auch andere funktionale Darstellungen vorstellbar. Im Allgemeinen kann die Schädigungsfunktion differenzierbar sein, beispielsweise stückweise differenzierbar und/oder stetig differenzierbar.

Es kann vorgesehen sein, dass die Optimierungsfunktion differenzierbar ist, beispielsweise stückweise und/oder stetig differenzierbar. Der erfindungsgemäße Ansatz ist besonders für solche Funktionen geeignet. Es können aber auch andere Optimierungsansätze verwendet werden, etwa ein MILP-Ansatz. Es können mehrere Optimierungsschritte oder -durchgänge durchgeführt werden, etwa in aufeinanderfolgenden Optimierungszeiträumen und/oder Ansteuerungszeiträumen.

Es kann vorgesehen sein, dass die Ableitungen Gradienten und/oder partielle Ableitungen sind. Entsprechend können Funktionen verwendet werden, die von mehreren Parametern abhängen.

Die Optimierungsfunktion kann eine Kostenfunktion sein. Eine Kostenfunktion kann zur Ansteuerung minimiert werden. Die Schädigungsfunktion kann Kosten durch die Ermüdung und/oder Schädigung parametrisieren. Allgemein kann die Optimierungsfunktion von einem oder mehreren steuerbaren oder regelbaren Parametern abhängen, deren Betriebswerte optimierbar sein können.

Ferner kann ein Steuerungssystem mit einer Bearbeitungseinrichtung vorgesehen sein, wobei das Steuerungssystem, insbesondere die Bearbeitungseinrichtung, dazu ausgebildet ist, ein hierin beschriebenes Verfahren zu steuern und/oder auszuführen. Das Steuerungssystem und/oder die Bearbeitungseinrichtung können zur Ansteuerung über eine oder mehrere geeignete Schnittstellen mit einem anzusteuernden System verbunden oder verbindbar sein.

Es wird außerdem ein System beschrieben, welches ein hierin beschriebenes Steuerungssystem und ein von diesem anzusteuerndes System mit dynamischer Last umfasst. Ein anzusteuerndes System kann allgemein eine industrielle Anlage und/oder Einrichtung sein, welche im Betrieb einer dynamischen Last unterliegt, etwa eine Windkraftanlage oder Turbine oder ein Generator. Die dynamische Last kann auf einen Teil der Einrichtung wirken, oder unterschiedliche Teile können unterschiedlichen Lasten unterliegen. Beispiele für Lasten sind mechanische Lasten wie Spannung, Kraft, Drehmoment, Dehnung, Verformung, oder thermische Belastung wie etwa Temperatur, Konvektion, Wärmestrom, elektrische oder elektrochemisehe Lasten wie elektrische Spannung, Stromstärke, Speicherhysterese, elektromagnetische Belastung wie Strahlung, insbesondere UV-Strahlung oder Gamma-Strahlung, oder Ionisation oder ionisierende Strahlung, oder magnetische Belastung wie Ummagnetisierung oder Hysterese. Eine Einrichtung oder ein Teil einer Einrichtung kann einer oder mehreren solcher Lasten unterliegen. Entsprechend können Ermüdungszyklen für kombinierte Lasten erstellt werden, und/oder durch eine gemeinsame Schädigungsfunktion erfasst werden, oder es können separate Schädigungen und/oder Ermüdungszyklen bestimmt werden.

Eine Bearbeitungseinrichtung kann allgemein Bearbeitungslogik, und/oder Bearbeitungsschaltungen, und/oder Speicher aufweisen, welche betreibbar sind, um das Verfahren auszuführen. Es kann vorgesehen sein, dass die Bearbeitungseinrichtung ein einzelnes System oder ein verteiltes System repräsentiert, etwa einen oder mehrere Computer, und/oder als Cloud-System implementiert ist. Eine Bearbeitungslogik kann eine integrierte Schaltung und/oder eine oder mehrere Prozessoren und/oder Kontroller und/oder ASICs (Application Specific Integrated Circuitry, Anwendungsspezifische integrierte Schaltung) oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM (Random Access Memory) und/oder optischen Speicher und/oder magnetischen Speicher und/oder Flash und/oder NAND (Not AND) Speicher, usw. Es kann allgemein ein Speichermedium vorgesehen sein, welches Instruktionen speichert, die dazu geeignet sind, eine Bearbeitungseinrichtung dazu zu bringen, das hierin beschrieben Verfahren auszuführen. Das Speichermedium kann insbesondere ein nichtflüchtiges und/oder nicht-transitorisches Medium sein. Es ist ein Computerprogramm beschrieben, welches derartige Instruktionen aufweist. Das Computerprogramm kann Module aufweisen, um die Aktionen und/oder Schritte des Verfahrens auszuführen, insbesondere ein Lastrepräsentationsmodul, und/oder ein Schädigungsmodul, und/oder ein Optimierungsmodul, und/oder ein Ansteuerungsmodul.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Fig. 1: einen beispielshaften erfindungsgemäßen Ansatz zur Optimierung zeigt;
- Fig. 2: einen beispielhaften Verlauf einer mechanische Spannung repräsentierenden Systemrepräsentation; und
- Fig. 3: einen zeitlichen Verlauf eines Gradienten einer Zielfunktion/Optimierungsfunktion darstellt.

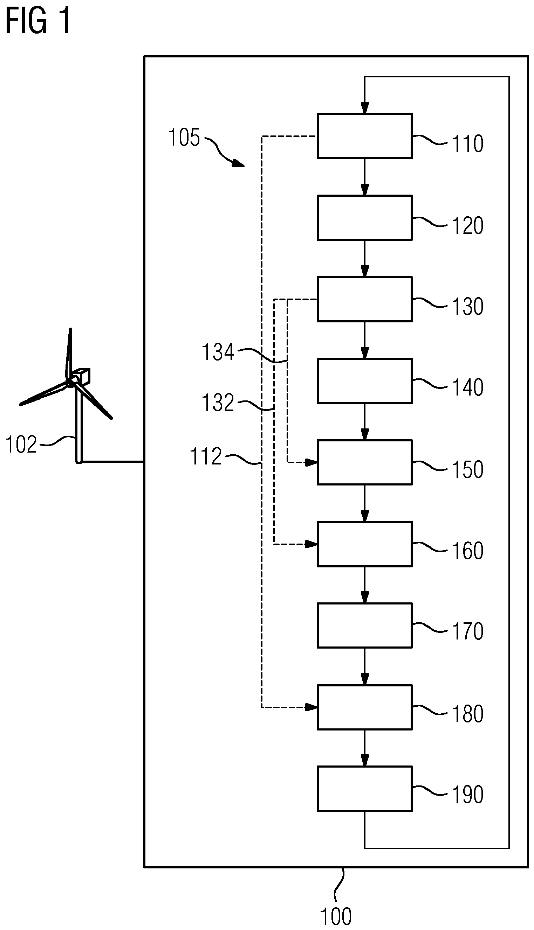

Fig. 1 zeigt einen Ansatz zur Optimierung beispielhaft mit Bezug auf eine mechanische Spannung σ(k). Ein Steuerungssystem 100 ist zur Ansteuerung einer Einrichtung 102 mit dynamischer Last eingerichtet. Die Einrichtung 102 kann beispielhaft eine Windkraftanlage sein, und die mechanische Spannung kann die Spannung am Fuß der Anlage sein. Zur Steuerung kann das Steuerungssystem 100 ein Verfahren 105 durchführen, das als beispielhaftes Ablaufdiagramm eingezeichnet ist.

Eine Systemrepräsentation kann allgemein die zu beeinflussende Last, hier die mechanische Spannung, in Abhängigkeit von Optimierungsparametern oder -variablen Uij repräsentieren. In einer ersten Aktion 110 werden Trajektorien der Systemzustände x oder σ, welche durch die Systemrepräsentation dargestellt sind, für definierte Anfangswerte σ(0) und Optimierungsvariablen Ui,j bestimmt, sowie deren Gradienten ∂σ(t)/∂Ui,j für einen Zeitraum bestimmt, etwa durch Simulation.

Ferner werden in einer Aktion 120 aus ausgewählten Zuständen, etwa Betriebszuständen, charakteristischen Werten oder Extremwerten wie lokalen Maxima und/oder Minima extrahiert. Mittels eines Zählverfahrens wie eines Rainflow-Verfahrens werden in Aktion 130 Zyklen c ermittelt, um insbesondere hinsichtlich Amplitude (Zyklusabstand) σa,c und Mittelwert σm,c einzelner Zyklen eine Lastrepräsentation bereitzustellen. Die Ermüdungszyklen können in halbe und ganze Zyklen eingeteilt werden, je nach Systemtrajektorie. Dabei können auch Abtastpunkte k, insbesondere ein maximaler kmax,c und ein minimaler kmin,c und/oder Abtastintervalle für ein zeitdiskretes Abtastgitter bestimmt werden, welches beispielsweise dem betrachteten Zyklus entspricht.

Dann werden in einer Aktion 140 äquivalente Belastungen σeq,c und Gradienten ∂σeq/∂σm und ∂σeq/∂σa für jeden Zyklus c bestimmt, etwa unter Verwendung der Goodman-Gleichung. Eine Schädigungsfunktion, welche insbesondere stetig differenzierbar sein kann, kann in einer Aktion 150 modelliert werden, insbesondere für jeden Zyklus c, um J(σm,σa) zu bestimmen, wobei jeweils Mittelwert und Amplitude Eingangswerte sind. Dabei können die Gradienten der Schädigungsfunktion J bezüglich Mittelwerten und Amplituden unter Verwendung der Gradienten aus dem Schritt 140 bestimmt werden ∂J/∂σm und ∂J/∂σa, jeweils für jeden Zyklus c. Jeder Gradient kann mit einem Gewichtungswert 134 versehen werden, etwa wc=0,5 oder 1, je nachdem ob der zugehörige Zyklus ein halber oder voller Zyklus ist.

Basierend auf den Abtastpunkten k 132 können in einer Aktion 160 Jakobi-Matrizen von Mittelwerten ∂σm,c/∂σ(k) und Amplituden ∂σm,c/∂σ(k)bestimmt werden. Eine Gesamtschädigung kann in Aktion 170 bestimmt werden, etwa unter Berücksichtigung der linearen Schadensakkumulation nach Miner-Palmgren. Dazu können die Gradienten der Schädigungsfunktion aus Aktion 150 und die Jakobi-Matrizen aus Aktion 160 verwendet werden. Die Gradienten der Gesamtschädigung ∂σJ/∂Ui,j bezüglich der Optimierungsvariablen Ui,j ergeben sich in einer Aktion 180 als Produkt aus den Gradienten der Gesamtschädigung ∂J/∂σ(k) und den Gradienten der Systemzustände ∂σ(k)/∂Ui,j 112. Die Berücksichtigung der Mittelwerte ist optional. Die Gradienten der Gesamtschädigung können zur Optimierung eingesetzt werden, etwa in einem Optimierungsschritt, in welchem Optimierungsparamater Ui,j aktualisiert werden.

Eine Ansteuerung des Systems 102 auf der Basis eines bestimmten Gradienten kann in einer Aktion 190 erfolgen.

Mit den aktualisierten Ui,j und entsprechenden Anfangsbedingungen σ(0) kann der Algorithmus 105 erneut durchlaufen werden, insbesondere zyklisch.

Das Verfahren 105 kann leicht automatisiert werden. Entsprechend sind auch stetige und/oder differenzierbare Funktionen nicht notwendigerweise geschlossen behandelt, sondern können numerisch ausgewertet werden.

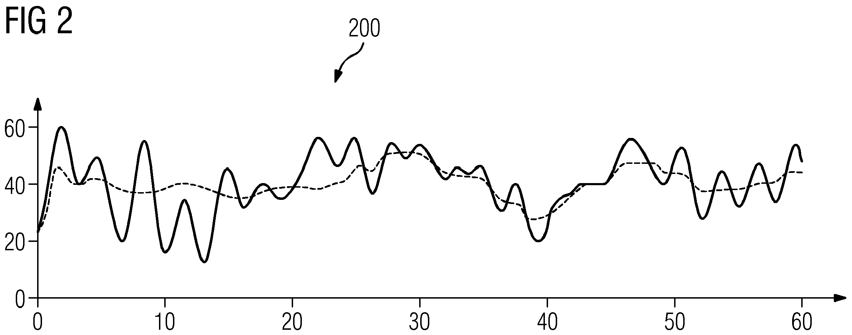

Fig. 2 zeigt einen ersten zeitlichen Verlauf 200 einer mechanischen Spannung σ(k) bei Optimierung mit (gepunktet) und ohne Rainflow-Zählverfahren über die Zeit t. Im Beispiel konnte die Kostenfunktion der Schädigung über den betrachteten Zeitraum von 60s um 83% reduziert werden.

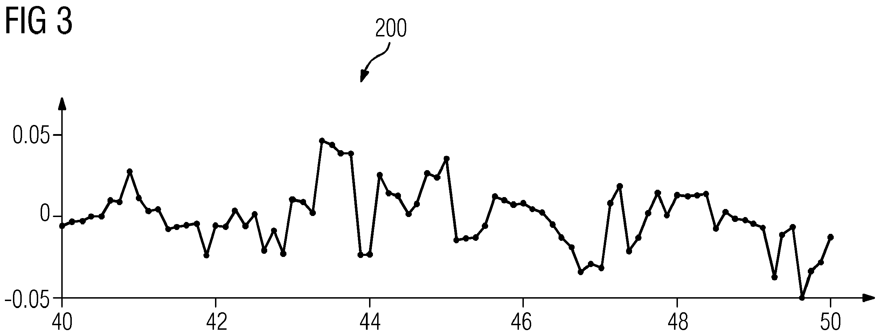

Fig. 3 zeigt einen zweiten zeitlichen Verlauf 300 eines Gradienten der Gesamtschädigung ∂J/∂Ui,j, dessen zugehörige Optimierungsvariable nach erfolgter Optimierung der Kostenfunktion oder Zielfunktion zur Ansteuerung verwendet werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (105) zur Steuerung eines Systems (102) mit dynamischer Last, wobei das Verfahren (105) folgende Schritte umfasst:
- Bestimmen eines zeitlichen Verlaufs von Lastwerten des Systems (102);
- Bestimmen charakteristischer Werte des Verlaufs;
- Bestimmen (130) einer Lastrepräsentation lastabhängiger Ermüdungszyklen des Systems (102) auf der Basis der charakteristischen Werte;
- Bestimmen einer Ableitung numerischer Werte der Lastrepräsentation bezüglich numerischer Werte der Last;
- Bestimmen (150) einer Schädigungsrepräsentation in Abhängigkeit von der Lastrepräsentation und der Ableitung der Lastrepräsentation basierend auf einer Schädigungsfunktion, wobei die Schädigungsrepräsentation die totale Ableitung der Schädigungsfunktion repräsentiert;
- Bereitstellen (190) einer Ansteuerung des Systems (102), basierend auf einer Optimierungsfunktion, wobei die Optimierungsfunktion auf der Schädigungsrepräsentation basiert.

2. Verfahren (105) zur Steuerung eines Systems (102) mit dynamischer Last, wobei das Verfahren (105) folgende Schritte umfasst:
a. Festlegen des Werts eines Steuerparameters des Systems (102);
b. Bestimmen eines zeitlichen Verlaufs von Lastwerten des Systems (102);
c. Bestimmen charakteristischer Werte des Verlaufs;
d. Bestimmen (130) einer Lastrepräsentation lastabhängiger Ermüdungszyklen des Systems (102) auf der Basis der charakteristischen Werte;
e. Bestimmen (150) einer Schädigungsrepräsentation in Abhängigkeit von der Lastrepräsentation basierend auf einer Schädigungsfunktion;
f. Verändern des Werts des Steuerparameters und wiederholen der Schritte b. bis e., um eine weitere Schädigungsrepräsentation zu bestimmen;
g. Bilden einer finiten Differenz auf der Basis der Schädigungsrepräsentation und der weiteren Schädigungsrepräsentation und den zugeordneten Werten des Steuerparameters, um eine Ableitung der Schädigungsrepräsentation zu bestimmen;
h. Bereitstellen (190) einer Ansteuerung des Systems (102), basierend auf einer Optimierungsfunktion, wobei die Optimierungsfunktion auf der Ableitung der Schädigungsrepräsentation und einem aktuellen Wert des Steuerparameters basiert.

3. Verfahren (105) nach Anspruch 1 oder 2, wobei die Lastrepräsentation auf einem Rainflow-Verfahren basiert.

4. Verfahren (105) nach Anspruch 1 bis 3, wobei die Lastrepräsentation bezüglich aller Lastwerte bestimmt wird.

5. Verfahren (105) nach einem der vorangehenden Ansprüche, wobei die Lastrepräsentation auf einen zukünftigen Zeitpunkt bezogen ist.

6. Verfahren (105) nach einem der vorangehenden Ansprüche, wobei die Schädigungsrepräsentationen in einer ersten Phase auf der Basis einer Vielzahl Lastrepräsentationen bestimmt werden und die Ansteuerung des Systems in einer zweiten Phase auf der Basis der bestimmten Schädigungsrepräsentationen bereitgestellt wird.

7. Verfahren (105) nach einem der vorangehenden Ansprüche, wobei die Schädigungsrepräsentation Ableitungen der Schädigungsfunktion an Mittelwerten der Last basierend auf der Lastrepräsentation repräsentiert.

8. Verfahren (105) nach einem der vorangehenden Ansprüche, wobei die Schädigungsfunktion auf einer Wöhler-Funktion basiert.

9. Verfahren (105) nach einem der vorangehenden Ansprüche, wobei die Optimierungsfunktion differenzierbar ist.

10. Verfahren (105) nach einem der vorangehenden Ansprüche, wobei mehrere Optimierungsschritte durchgeführt werden.

11. Verfahren (105) nach einem der vorangehenden Ansprüche, wobei die Ableitungen Gradienten sind.

12. Verfahren (105) nach einem der vorangehenden Ansprüche, wobei die Optimierungsfunktion eine Kostenfunktion ist.

13. Steuerungssystem (100) mit einer Bearbeitungseinrichtung, wobei das Steuerungssystem (100) dazu ausgebildet ist, ein Verfahren nach einem der vorangehenden Ansprüche zu steuern und/oder auszuführen.

14. System, welches ein Steuerungssystem (100) nach Anspruch 12 und ein von diesem anzusteuerndes System (102) mit dynamischer Last umfasst.
